# EUROPÄISCHE PATENTSCHRIFT

(11) **EP 3 702 416 B1**
(45) Veröffentlichungstag und Bekanntmachung des Hinweises auf die Patenterteilung: **03.09.2025**
(21) Anmeldenummer: 20157047.0
(22) Anmeldetag: 13.02.2020
(51) Int. Cl.: C09D 5/02, C09K 3/30, C09D 7/61, C09D 7/20, C09D 5/20, B05D 1/02, B05D 5/06

(54) **DIAMANTOIDE ENTHALTENDE SPRÜHFÄHIGE ZUSAMMENSETZUNG GEEIGNET ZUR REVERSIBLEN OBERFLÄCHENBESCHICHTUNG**
DIAMANDOID-CONTAINING SPRAYABLE COMPOSITION CAPABLE OF REVERSIBLE SURFACE COATING
COMPOSITION PULVÉRISABLE CONTENANT DU DIAMANTOÏDE APPROPRIÉE POUR UN REVÊTEMENT DE SURFACE RÉVERSIBLE

(30) Priorität: 26.02.2019 DE 202019101101 U
(43) Veröffentlichungstag der Anmeldung: 02.09.2020
(73) Patentinhaber: MR Chemie GmbH, 59427 Unna (DE)
(72) Erfinder: SOWIETZKI, Damian, 59427 Unna (DE); RENZING, Carsten, 59427 Unna (DE)
(74) Vertreter: Michalski Hüttermann & Partner Patentanwälte mbB

(56) Entgegenhaltungen:
- EP-A1- 0 462 734
- EP-B1- 0 462 734
- DE-A1- 102017 005 172
- DE-A1- 102017 010 280
- JP-A- 2013 032 550

## Beschreibung

Der Gegenstand der vorliegenden Erfindung betrifft eine sprühfähige Zusammensetzung enthaltend Diamantoide geeignet zur reversiblen Beschichtung von Oberflächen.

In der DE 10 2017 005 172 A1 wird ein Mittel zur reversiblen Oberflächenmodifizierung an optisch inkompatiblen Objekten zur temporären Mattierung, Versiegelung und Konservierung für optische Messungen, wobei auf der Oberfläche des zu untersuchenden Objektes mindestens eine dünne optisch wirksame Schicht mit weitgehend gleichmäßig spektralem Reflexions- und Streuvermögen aufgetragen wird und wobei sich das hierfür verwendete Mittel aufgrund seiner Flüchtigkeit in relativ kurzer Zeit nach dem Auftragen wieder selbsttätig und rückstandsfrei entfernt, wobei das Mittel als eine wesentliche Komponente den Kohlenwasserstoff Adamantan oder von Adamantan hergestellte Derivate aufweist.

Die nachveröffentlichte DE 10 2017 010 280 A1 beschreibt ein Mittel zur reversiblen flüchtigen Mattierung oder Beweißung von optisch schwer oder nicht messbaren Objekten mit Spiegelung, Glanz, Absorption, Farbkontrast oder/und störenden Texturen oder/und offen porösen Materialgefügen zur zeitweisen optischen Versiegelung und Schaffung guter Messbedingungen auf den mit Licht anzutastenden Oberflächen, wobei das Mittel Adamantan als Komponente eines Stoffgemisches mit Cyclohexan enthält.

Der Nachteil der in der DE 10 2017 005 172 A1 beschriebenen Mittel ist, dass diese keine sprühfähige Spray- beziehungsweise Aerosoldosen Befüllung beschreiben, in der Adamantan oder von Adamantan hergestellte Derivate oder Diamantan, in hohen Konzentrationen bei Raumtemperatur in einer Zusammensetzung umfassend bei Raumtemperatur gasförmige Kohlenwasserstoffe, die nachfolgend auch als Treibmittel bezeichnet werden, gelöst sind, welche sich unter Bildung einer homogenen, gleichmäßigen reversiblen Beschichtung auf Oberflächen in Form eines Aerosols aufsprühen lässt. < **Seite 1a hier einfügen>**

Adamantan oder Diamantan, lassen sich in nur geringen Anteilen von < 3 Gew.-% in Aceton oder Alkoholen, wie Ethanol, lösen. Höhere Adamantan oder Diamantan - Konzentrationen von ≥ 3 Gew.-%, die homogen bei Raumtemperatur in einer Zusammensetzung umfassend bei Raumtemperatur gasförmige Kohlenwasserstoffe, die nachfolgend auch als Treibmittel bezeichnet werden, gelöst sind, keine Phasentrennung aufweisen und sich als Aerosol versprühen lassen, sind bisher nicht bekannt.

Aufgabe der Erfindung ist es daher, eine Diamantoide und/oder ein Diamantoid-Derivat enthaltende, Treibmittel aufweisende, Zusammensetzung, insbesondere in Form einer Spraydosenfüllung, für ein Besprühen von Oberflächen zur Verfügung zu stellen, mittels der eine homogene, reversible Oberflächenbeschichtung aufbringbar ist, die beispielsweise durch thermische Einwirkung, leicht entfernbar oder sogar nach einer vorherbestimmten Zeitdauer rückstandsfrei oder fast rückstandsfrei, d.h. > 99 Gew.-%, bezogen auf das auf die Oberfläche aufgebrachte Diamantoide und/oder Diamantoid-Derivat von alleine von der Oberfläche sublimiert.

Diese Aufgabe wird erfindungsgemäß durch eine sprühfähige Zusammensetzung nach Anspruch 1 gelöst.

Die Unteransprüche beschreiben bevorzugte Ausführungsbeispiele für die erfindungsgemäße Zusammensetzung und für deren Verwendung.

Zur Lösung der Aufgabe der vorliegenden Erfindung wird eine Zusammensetzung zur Verfügung gestellt, enthaltend die Komponenten:
a) ≥ 25 Gew.-% bis ≤ 90 Gew.-% wenigstens einen Kohlenwasserstoff, der bei 23° C gasförmig ist, aus der Gruppe der C₁ bis C₄ - Kohlenwasserstoffe ausgewählt ist;
b) ≥ 3 Gew.-% bis ≤ 20 Gew.-% wenigstens ein Cycloalkan ausgewählt aus der Gruppe der Diamantoide und/oder ein Diamantoid-Derivat davon; und
c) wenigstens eine Lösungsmittel-Komponente, die bei 23° C flüssig ist, und ausgewählt ist aus der Gruppe umfassend Aceton, C₁ bis C₄ Alkohol und/oder C₅ bis C₈ Kohlenwasserstoff;
wobei die Gewichtsprozentangaben auf das Gesamtgewicht der Zusammensetzung bezogen sind und die Komponenten a), b) und c) so gewählt sind, dass das Gesamtgewicht der Komponenten 100 Gew.-% nicht übersteigt.

Das Merkmal Raumtemperatur, wenn nicht anders angegeben bezieht sich auf eine Temperatur von 23° C.

Bezogen auf die Kohlenwasserstoffe der erfindungsgemäßen Zusammensetzung ist der Gewichtsanteil an Adamantan geringer als der Gewichtsanteil der anderen Kohlenwasserstoffe, so dass der Gewichtsanteil an Adamantan kein wesentlicher Gewichtsanteil ist.

Die Komponente a) wird nachfolgend auch als Treibgas bezeichnet.

Der Erfindung liegt somit die überraschende Erkenntnis zugrunde, daß eine Zusammensetzung enthaltend wenigstens ein Cycloalkan ausgewählt aus der Gruppe der Diamantoide und/oder ein Diamantoid-Derivat davon einerseits, sowie eines Treibgases als Trägermedium enthaltend wenigstens einen Kohlenwasserstoff, der bei 23° C gasförmig ist, und aus der Gruppe der C₁ bis C₄ - Kohlenwasserstoffe ausgewählt ist, und weiterhin eine Lösungsmittel-Komponente, die bei 23° C flüssig ist, und ausgewählt ist aus der Gruppe umfassend Aceton, C₁ bis C₄ Alkohol und/oder C₅ bis C₈ Kohlenwasserstoff, enthält, als Füllung von Spraydosen dienen kann.

Es hat sich ferner überraschend gezeigt, dass die erfindungsgemäße Zusammensetzung höhere Konzentrationen von ≥ 3 Gew.-% bis ≤ 20 Gew.-% Diamantoid und/oder Diamantoid-Derivat, bezogen auf das Gesamtgewicht der Zusammensetzung, gelöst bei 23° C enthalten kann, ohne dass diese Zusammensetzung zum Versprühen der höheren Konzentrationen von ≥ 3 Gew.-% bis ≤ 20 Gew.-% Diamantoid und/oder Diamantoid-Derivat vor dem Versprühen oder zum Versprühen erwärmt werden muss. Bisher bekannte Zusammensetzung müssen um höhere Diamantoid und/oder Diamantoid-Derivat Konzentrationen zu erhalten, insbesondere Adamantan, erwärmt werden, um die Löslichkeit zu erhöhen. Mit anderen Worten, bei den im Stand der Technik bekannten Diamantoid und/oder Diamantoid-Derivat, insbesondere Adamantan enthaltenden Lösungen, muss eine solche Lösung erwärmt werden, um höhere Konzentrationen von Diamantoid und/oder Diamantoid-Derivat, insbesondere Adamantan, in einer Lösung vollständig bzw. homogen zu lösen. Der Vorteil der erfindungsgemäßen Zusammensetzung ist, dass diese eine hohe Konzentrationsanteil von Diamantoid und/oder Diamantoid-Derivat, insbesondere Adamantan, enthalten, der bei Raumtemperatur vollständig bzw. homogen gelöst ist, wobei ein sprühfähige Zusammensetzung erhalten wird, die bei Raumtemperatur versprühbar ist. Es also keiner weiteren Wärmeeinwirkung bedarf, um beispielsweise eine höhere, vollständig bzw. homogen gelöste Adamantankonzentration von ≥ 3 Gew.-%, vorzugsweise ≥ 5 Gew.-% zu erreichen. Weiterhin hat sich überraschend gezeigt, dass diese eine höhere Konzentrationen von ≥ 3 Gew.-% Diamantoid und/oder Diamantoid-Derivat, insbesondere Adamantan, gelöst enthaltende Zusammensetzung als Aerosol bei Raumtemperatur, ohne vorheriges erwärmen, versprühbar ist und auf Oberflächen eine homogene, reversible Oberflächenbeschichtung, ausbildet.

Die erfindungsgemäße Zusammensetzung kann sogar bei tieferen Temperaturen, beispielsweise 15° C versprüht werden, ohne die Zusammensetzung erwärmt werden muss, und ohne dass Diamantoid und/oder Diamantoid-Derivat, insbesondere Adamantan, aus der versprühbaren erfindungsgemäßen Zusammensetzung ausfällt.

Es hat sich überraschend gezeigt, dass die erfindungsgemäße Zusammensetzung in einem Temperaturbereich von größer oder gleich -10 °C bis kleiner oder gleich +50°C versprüht werden kann. Somit eignet sich die erfindungsgemäße Zusammensetzung vorteilhafter Weise auch für Anwendungen, in denen eine vorherige Temperatureinstellung nicht möglich ist, besonders gut. In vorteilhafter Weise handelt sich um ein Kaltsprühsystem, welches nicht vor der Anwendung erwärmt werden muss.

Es hat sich überraschend gezeigt, dass durch die besonders hohen erreichbaren Konzentrationen die erzeugten Oberflächenbeschichtungen besonders lange auf der Oberfläche verbleiben, da eine besonders dicke Beschichtung möglich wird. Somit eignet sich die erfindungsgemäße Zusammensetzung vorteilhafterweise auch für die Beschichtung besonders großer Flächen

Es hat sich insbesondere als Vorteilhaft herausgestellt, dass durch den Anteil an Aceton, C₁ bis C₄ Alkohol und/oder C₅ bis C₈ Kohlenwasserstoff eine verbesserte Benetzung der mittels der erfindungsgemäßen Zusammensetzung besprühten Oberfläche mit Diamantoid und/oder Diamantoid-Derivat erhalten werden kann. Folglich weist die bei Raumtemperatur sprühfähige Zusammensetzung nicht nur eine höhere Diamantoid und/oder Diamantoid-Derivat, insbesondere Adamantan, Konzentrationen auf sondern auch eine verbesserte Benetzbarkeit der besprühten Oberfläche.

Das Merkmal "reversibel" im Sinne der vorliegenden Beschreibung bedeutet, dass die mittels der erfindungsgemäßen Zusammensetzung erzeugte Oberflächenbeschichtung, beispielsweise durch thermische Behandlung und/oder nach einer vorbestimmten Zeit, von der Oberfläche rückstandslos oder fast rückstandsfrei sublimiert, d.h. > 99 Gew.-%, bezogen auf das auf die Oberfläche aufgebrachte Diamantoide und/oder Diamantoid-Derivat, sublimiert. Besondere Maßnahmen zum Entfernen der Aufsprühung sind somit nicht erforderlich.

Es wurde weiterhin vorteilhaft festgestellt, dass mittels der erfindungsgemäßen Zusammensetzung eine hohe Konzentration von ≥ 3 Gew.-% bis ≤ 20 Gew.-% Diamantoid und/oder Diamantoid-Derivat als Aerosol auf eine Oberfläche versprühen lässt.

Es wurde weiterhin vorteilhaft festgestellt, dass die als Aerosol versprühte erfindungsgemäße Zusammensetzung eine reversible Oberflächenbeschichtung mit einer homogenen Verteilung des Diamantoid und/oder Diamantoid-Derivat ausbildet.

Es wurde weiterhin vorteilhaft festgestellt, dass die als Aerosol versprühte erfindungsgemäße Diamantoid und/oder Diamantoid-Derivat enthaltende Zusammensetzung eine reversible Oberflächenbeschichtung mit einer sehr geringen Schichtdicke ausbildet.

Es wurde weiterhin vorteilhaft festgestellt, dass die als Aerosol versprühte erfindungsgemäße Diamantoid und/oder Diamantoid-Derivat enthaltende Zusammensetzung eine geschlossene, weiße, reversible Oberflächenbeschichtung ausbildet.

Weitere Vorteile der versprühbaren Zusammensetzung sind ein gegenüber Bemalen und Bedrucken schnellerer Auftrag, ein einfacheres Handling, höhere Deckschicht, Entleerung der Spraydose ohne bzw. nahezu ohne Rückstände.

Noch ein Vorteil ist die, mittels der höheren Konzentration von Diamantoid und/oder Diamantoid-Derivat in der erfindungsgemäßen Zusammensetzung, verlängerte Sublimationszeit.

Der erfindungsgemäßen Zusammensetzung können zusätzlich Additive zugesetzt werden, wie Pigmente, Farbstoffe oder andere farbig erscheinende Substanzen, die leicht oxidieren, durch chemische Reaktion zerstört werden und/oder aufgrund der Einwirkung von Licht und Wärme sublimieren.

Die mittels Versprühen der erfindungsgemäßen Zusammensetzung erhältliche Beschichtung weist ein sehr gutes spektrales Reflexions- und Streuvermögen auf. Somit lässt sich die mittels der erfindungsgemäßen Zusammensetzung erhältlich Beschichtung sehr gut für optische Oberflächenmessungen, beispielsweise für das optische 3D-Scannen sowie für Untersuchungen der Oberflächengüte bzw. Oberflächendefekte, verwenden.

Gemäß einer weiteren erfindungsgemäß geeigneten Zusammensetzung enthält diese die Komponenten:
a) ≥ 25 Gew.-% bis ≤ 90 Gew.-% wenigstens einen Kohlenwasserstoff, der bei 23° C gasförmig ist, aus der Gruppe der C₁ bis C₄ - Kohlenwasserstoffe ausgewählt ist;
b) ≥ 3 Gew.-% bis ≤ 20 Gew.-% wenigstens ein Cycloalkan ausgewählt aus der Gruppe der Diamantoide und/oder ein Diamantoid-Derivat davon; und
c) wenigstens eine Lösungsmittel-Komponente, die bei 23° C flüssig ist, und ausgewählt ist aus der Gruppe umfassend Aceton, C₁ bis C₄ Alkohol und/oder C₅ bis C₈ Kohlenwasserstoff;
wobei die Gewichtsprozentangaben auf das Gesamtgewicht der Zusammensetzung bezogen sind und die Komponenten a), b) und c) so gewählt sind, dass das Gesamtgewicht der Komponenten 100 Gew.-% nicht übersteigt; und wobei die Komponente b) bei 23° C in der Zusammensetzung vollständig gelöst ist.

Der Gegenstand der vorliegenden Erfindung wird anhand der nachstehenden Ausführungsformen weiter erläutert.

Bevorzugt kann vorgesehen sein, dass die erfindungsgemäße Zusammensetzung ≥ 5 Gew.-% bis ≤ 55 Gew.-% der wenigstens einen Lösungsmittel-Komponente enthält.

### Komponente a)

**Die erfindungsgemäße** Zusammensetzung weißt die Komponente a) auf, welche wenigstens ein Kohlenwasserstoff, der bei 23° C gasförmig, und aus der Gruppe der C₁ bis C₄ - Kohlenwasserstoffe ausgewählt ist.

Gemäß einer weiteren Ausführungsform kann die Komponente a) ein Gemisch aus Propan, n-Butan und Isobutan umfassen.

Die Komponente a) kann vorzugsweise ≥ 30 Gew.-% bis ≤ 80 Gew.-% eines Gemisches aus Propan, n-Butan und Isobutan, bevorzugt ≥ 35 Gew.-% bis ≤ 75 Gew.-% eines Gemisches aus Propan, n-Butan und Isobutan, weiter bevorzugt ≥ 40 Gew.-% bis ≤ 70 Gew.-% eines Gemisches aus Propan, n-Butan und Isobutan und außerdem bevorzugt ≥ 45 Gew.-% bis ≤ 70 Gew.-% eines Gemisches aus Propan, n-Butan und Isobutan, und besonders bevorzugt ≥ 50 Gew.-% bis ≤ 80 Gew.-% eines Gemisches aus Propan, n-Butan und Isobutan ausmachen.

Bei der Komponente a) handelt es sich um ein Treibgas. Die Komponente a) Propan kann ein n-Propan, ein Isopropan oder ein Gemisch aus n-Propan und Isopropan ist, wobei ein Gemisch aus Propan und Isopropan bevorzugt ist.

Gemäß einer weiteren Ausführungsform kann die Zusammensetzung die Komponente a) umfassen mit:
- ≥ 30 Gew.-% bis ≤ 60 Gew.-%, bevorzugt ≥ 40 Gew.-% bis ≤ 50 Gew.-% und besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
- ≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% Butan, wobei Butan ein n-Butan, ein iso-Butan, ein tert-Butan oder ein Gemisch aus mindestens n-Butan, iso-Butan und/oder tert-Butan, und vorzugsweise ein Gemisch aus n-Butan und iso-Butan ist.

Gemäß einer weiteren Ausführungsform kann die Zusammensetzung die Komponente a) umfassen mit:
- ≥ 30 Gew.-% bis ≤ 60 Gew.-%, bevorzugt ≥ 40 Gew.-% bis ≤ 50 Gew.-% und besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
- ≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% n-Butan;
- ≥ 0,1 Gew.-% bis 5 Gew.-%, bevorzugt ≥ 0,5 Gew.-% bis ≤ 2,5 Gew.-%, und besonders bevorzugt ≥ 0,75 Gew.-% bis ≤ 1,25 Gew.-% Isobutan.

### Komponente b)

Die erfindungsgemäße Zusammensetzung weißt die Komponente b) auf, welche wenigstens ein Cycloalkan ausgewählt aus der Gruppe der Diamantoide und/oder ein Diamantoid-Derivat davon aufweist.

Gemäß einer weiteren Ausführungsform kann die Komponente b) ein Diamantoid ausgewählt aus der Gruppe Adamantan, Icean (C₁₂H₁₈), BC-8 (C₁₄H₂₀), Diamantan (C₁₄H₂₀), Triamantan (C₁₈H₂₄), Isotetramantan (C₂₂H₂₈), Pentamantan (C₂₆H₃₂) und Super-Adamantan (C₃₀H₃₆) umfassen, wobei als Komponente b) Adamantan am meisten bevorzugt ist.

Gemäß einer weiteren Ausführungsform kann die Zusammensetzung die Komponente b) ein Diamantoid -Derivat, vorzugsweise 1-Adamantol aufweisen.

Gemäß einer weiteren Ausführungsform kann die Zusammensetzung die Komponente b) umfassen mit:
≥ 3 Gew.-% bis ≤ 18 Gew.-%, vorzugsweise ≥ 3,5 Gew.-% bis ≤ 16 Gew.-%, weiter bevorzugt ≥ 4 Gew.-% bis ≤ 14 Gew.-%, außerdem bevorzugt ≥ 4,5 Gew.-% bis ≤ 12 Gew.-%, und am meisten bevorzugt ≥ 5 Gew.-% bis ≤ 11 Gew.-% wenigstens ein Diamantoide ausgewählt aus der Gruppe umfassend Adamantan, Icean (C₁₂H₁₈), BC-8 (C₁₄H₂₀), Diamantan (C₁₄H₂₀), Triamantan (C₁₈H₂₄), Isotetramantan (C₂₂H₂₈), Pentamantan (C₂₆H₃₂) und Super-Adamantan (C₃₀H₃₆) und/oder wenigstens ein Diamantoid-Derivat, vorzugsweise 1-Adamantol, wobei als Komponente b) Adamantan am meisten bevorzugt ist.

### Komponente c)

Die erfindungsgemäße Zusammensetzung weißt die Komponente C) auf, welche wenigstens eine Lösungsmittel-Komponente aufweist, die bei 23° C flüssig, und ausgewählt ist aus der Gruppe umfassend Aceton, C₁ bis C₄ Alkohol und/oder C₅ bis C₈ Kohlenwasserstoff.

Gemäß einer weiteren Ausführungsform kann die Zusammensetzung die Komponente c) Aceton, Pentan, Ethanol und/oder Isopropanol umfassen.

Gemäß einer weiteren Ausführungsform kann die Zusammensetzung die Komponente c) umfassen mit:
- ≥ 0,1 Gew.-% bis ≤ 60 Gew.-%, ≥ 1 Gew.-% bis ≤ 55 Gew.-%, vorzugsweise ≥ 5 Gew.-% bis ≤ 50 Gew.-%, weiter bevorzugt ≥ 10 Gew.-% bis ≤ 45 Gew.-%, außerdem bevorzugt ≥ 15 Gew.-% bis ≤ 40 Gew.-%, insbesondere bevorzugt ≥ 20 Gew.-% bis ≤ 35 Gew.-%, wenigstens **einer Lösungsmittel-Komponente,** die bei 23° C flüssig ist, und ausgewählt ist aus der Gruppe umfassend Aceton, C₁ bis C₄ Alkohol und/oder Cs bis Cs Kohlenwasserstoff.

Gemäß einer weiteren Ausführungsform kann die Zusammensetzung die Komponente c) umfassen mit:
- ≥ 0,1 Gew.-% bis ≤ 60 Gew.-%, ≥ 1 Gew.-% bis ≤ 55 Gew.-%, vorzugsweise ≥ 5 Gew.-% bis ≤ 50 Gew.-%, weiter bevorzugt ≥ 10 Gew.-% bis ≤ 45 Gew.-%, außerdem bevorzugt ≥ 15 Gew.-% bis ≤ 40 Gew.-%, insbesondere bevorzugt ≥ 20 Gew.-% bis ≤ 35 Gew.-%, wenigstens einer Lösungsmittel-Komponente, die bei 23° C flüssig ist, und ausgewählt ist aus der Gruppe umfassend vorzugsweise Aceton, Pentan, Ethanol und/oder Isopropanol.

Gemäß einer weiteren Ausführungsform kann die Zusammensetzung die Komponente c) umfassen mit:
- ≥ 1 Gew.-% bis ≤ 55 Gew.-% Aceton, vorzugsweise ≥ 5 Gew.-% bis ≤ 50 Gew.-% Aceton, weiter bevorzugt ≥ 10 Gew.-% bis ≤ 45 Gew.-% Aceton, außerdem bevorzugt ≥ 15 Gew.-% bis ≤ 40 Gew.-% Aceton, insbesondere bevorzugt ≥ 20 Gew.-% bis ≤ 35 Gew.-% Aceton, und am meisten bevorzugt ≥ 30 Gew.-% bis ≤ 35 Gew.-% Aceton.

Gemäß einer weiteren Ausführungsform kann die Zusammensetzung die Komponente c) umfassen mit:
- ≥ 1 Gew.-% bis ≤ 50 Gew.-% Ethanol, vorzugsweise ≥ 5 Gew.-% bis ≤ 45 Gew.-% Ethanol, weiter bevorzugt ≥ 10 Gew.-% bis ≤ 40 Gew.-% Ethanol, außerdem bevorzugt ≥ 15 Gew.-% bis ≤ 35 Gew.-% Ethanol, insbesondere bevorzugt ≥ 20 Gew.-% bis ≤ 30 Gew.-% Ethanol, und am meisten bevorzugt ≥ 20 Gew.-% bis ≤ 25 Gew.-% Ethanol.

Gemäß einer weiteren Ausführungsform kann die Zusammensetzung die Komponente c) umfassen mit:
- ≥ 1 Gew.-% bis ≤ 30 Gew.-% Propanol, vorzugsweise ≥ 2 Gew.-% bis ≤ 25 Gew.-% Propanol, weiter bevorzugt ≥ 3 Gew.-% bis ≤ 20 Gew.-% Propanol, außerdem bevorzugt ≥ 4 Gew.-% bis ≤ 15 Gew.-% Propanol, insbesondere bevorzugt ≥ 5 Gew.-% bis ≤ 10 Gew.-% Propanol, und am meisten bevorzugt ≥ 10 Gew.-% bis ≤ 12 Gew.-% Propanol, wobei das Propanol vorzugsweise n-Propanol und/oder Isopropanol und bevorzugt Isopropanol ist.

Gemäß einer weiteren Ausführungsform kann die Zusammensetzung die Komponente c) umfassen mit:
- ≥ 1 Gew.-% bis ≤ 30 Gew.-% Pentan, vorzugsweise ≥ 2 Gew.-% bis ≤ 25 Gew.-% Pentan, weiter bevorzugt ≥ 3 Gew.-% bis ≤ 20 Gew.-% Pentan, außerdem bevorzugt ≥ 4 Gew.-% bis ≤ 15 Gew.-% Pentan, insbesondere bevorzugt ≥ 5 Gew.-% bis ≤ 10 Gew.-% Pentan, und am meisten bevorzugt ≥ 10 Gew.-% bis ≤ 12 Gew.-% Pentan, wobei das Pentan vorzugsweise ein n-Pentan und/oder iso-Pentan und bevorzugt n-Pentan ist.

### Druck

Gemäß einer weiteren Ausführungsform kann die Zusammensetzung druckbeaufschlagt sein. Druckbeaufschlagt bedeutet im Sinne der vorliegenden Beschreibung, dass die Zusammensetzung unter einen Druck steht, der größer als der Atmosphärendruck von 101,3 kPa ist. Der für die druckbeaufschlagte Zusammensetzung angegebene Druck in kPa bezieht sich auf den Atmosphärendruck übersteigenden Druck. Die Begriffe "steht unter Druck" und "druckbeaufschlagt" werden gleichbedeutend verwendet.

Gemäß einer weiteren Ausführungsform ist die unter Druck stehende Zusammensetzung mit einem Druck von ≥ 100 kPa bis ≤ 1000 kPa, vorzugsweise von ≥ 200 kPa bis ≤ 800 kPa, weiter bevorzugt von ≥ 300 kPa bis ≤ 600 kPa, und besonders bevorzugt von ≥ 400 kPa bis ≤ 500 kPa, beaufschlagt.

Es hat sich herausgestellt, dass man mit einer Druckbeaufschlagung der erfindungsgemäßen Zusammensetzung im Bereich von ≥ 400 kPa bis ≤ 500 kPa sowohl eine hohe Konzentration von gelöstem Diamantoid und/oder Diamantoid-Derivat davon, insbesondere Adamantan, in der Zusammensetzung erreichen kann, als auch gleichzeitig die Zusammensetzung beim Versprühen ein sehr gutes Ärosolbildungsverhalten aufweist, und beim Versprühen eine reversible, sehr dünne und homogene Diamantoid-Beschichtung und/oder Diamantoid-Derivat-Beschichtung davon, insbesondere Adamantan-Beschichtung, auf der besprühten Oberfläche ausbildet. Diese reversible, sehr dünne und homogene Beschichtung kann auch als Film bezeichnet werden.

Gemäß einer weiteren Ausführungsform kann die Zusammensetzung als eine homogene und/oder klare flüssige Lösung bei 23° C vorliegen. Gemäß einer weiteren Ausführungsform kann die Zusammensetzung als eine homogene und/oder klare flüssige Lösung bei 23° C vorliegen.

Gemäß einer weiteren Ausführungsform kann die Zusammensetzung als eine homogene und/oder klare flüssige Lösung bei 23° C und mit einer Druckbeaufschlagung der erfindungsgemäßen Zusammensetzung im Bereich von ≥ 400 kPa bis ≤ 500 kPa vorliegen.

Homogene Lösung im Sinne dieser Erfindung bedeutet, dass sich das Diamantoid und/oder Diamantoid-Derivat davon, insbesondere Adamantan, in einer gleichmäßigen Konzentrationsverteilung bei 23° C gelöst hat.

Klare Lösung im Sinne dieser Beschreibung bedeutet, dass bei in Augenscheinnahme der Lösung mit dem bloßen Auge eines Betrachters keine Agglomerate oder Partikel in der Lösung sichtbar sind.

Die erfindungsgemäße Zusammensetzung bildet, beispielsweise beim Versprühen, auf einer Oberfläche eine reversible Oberflächenbeschichtung bzw. reversiblen Oberflächenfilm aus. Diese reversible Oberflächenbeschichtung bzw. dieser reversible Oberflächenfilm entfernt sich selbstständig bzw. sublimiert.

Diese selbständig entfernbare Oberflächenbeschichtung bzw. Oberflächenfilm, gebildet durch Aufbringung, insbesondere versprühen, der erfindungsgemäßen Zusammensetzung, auf eine Oberfläche, kann eine Oberflächenbeschichtung bzw. einen Oberflächenfilm vorzugsweise mit einer Schichtdicke von 0.5 µm bis 30 µm, bevorzugt von 1 µm bis 25 µm, weiter bevorzugt von 2 µm bis 20 µm, und besonders bevorzugt von 3 µm bis 30 µm, ausbilden.

Vorteilhaft ist, dass durch die definierte Lösemittelzusammensetzung das eigentlich schlecht lösliche das Diamantoid und/oder Diamantoid-Derivat davon, insbesondere Adamantan, in hohen Konzentrationen gelöst werden kann, so dass eine sehr dünne Schichtdicke mit einer hohen Diamantoid-Konzentration und/oder Diamantoid-Derivat-Konzentration davon, insbesondere Adamantan-Konzentration, ausgebildet werden kann. Über die Konzentration und die Schichtdicke lässt sich die Verweilzeit steuern, bis zu der das Diamantoid und/oder Diamantoid-Derivat, insbesondere Adamantan, selbstständig und vollständig ohne Rückstände von der Oberfläche sublimiert oder fast rückstandsfrei sublimiert, d.h. > 99 Gew.-%, bezogen auf das auf die Oberfläche aufgebrachte Diamantoide und/oder Diamantoid-Derivat.

Der beispielsweise mittels versprühen auf eine Oberfläche aufgebrachte selbständig entfernbare Oberflächenfilm bzw. Oberflächenbeschichtung kann die Oberfläche mattieren, vorzugsweise kann die so behandelte Oberfläche weißmattiert sein.

Gemäß einer weiteren Ausgestaltung der Erfindung kann eine Vorrichtung die erfindungsgemäße druckbeaufschlagte Zusammensetzung aufweisen.

Gemäß einer weiteren Ausführungsform kann diese Vorrichtung vorzugsweise eine Sprühvorrichtung und bevorzugt eine Sprühdose, auch Spraydose genannt, sein.

Die erfindungsgemäße Zusammensetzung kann beispielsweise zur Ausbildung einer dünnen, sublimierbaren Beschichtung auf Oberflächen, für optische Messungen an diesen Oberflächen, verwendet werden.

Die erfindungsgemäße Zusammensetzung kann beispielsweise zur Ausbildung einer dünnen, sublimierbaren Beschichtung auf Oberflächen von Formkörpern, zur tomografischen Vermessung dieser Formkörper, verwendet werden.

Die erfindungsgemäße Zusammensetzung kann weiterhin beispielsweise zur Ausbildung einer dünnen, sublimierbaren Beschichtung auf Oberflächen von Formkörpern, zur zerstörungsfreien Werkstoffprüfung (NDT) an Oberflächen, verwendet werden.

Der Druck mit der die erfindungsgemäße Zusammensetzung bei 23° C beaufschlagt ist, stellt sich automatisch ein und ergibt sich insbesondere durch die Menge an Treibgas und dem Innenvolumen der mit der erfindungsgemäßen Zusammensetzung befüllten Sprayflasche bzw. Spraydose oder auch als Sprühdose bezeichnet. Bevorzugt weisen die Spraydosen, auch als Sprühdose bezeichnet, enthaltend eine erfindungsgemäße Zusammensetzung einen Innendruck von 4 bis 5 bar auf.

Erfindungsgemäße Zusammensetzungen können beispielsweise umfassen:
a) ≥ 20 Gew.-% bis ≤ 40 Gew.-% Propan, vorzugsweise ≥ 22 Gew.-% bis ≤ 38 Gew.-% Propan, weiter bevorzugt ≥ 24 Gew.-% bis ≤ 34 Gew.-% Propan oder auch bevorzugt ≥ 28 Gew.-% bis ≤ 30 Gew.-% Propan, wobei das Propan beispielsweise ein n-Propan und/oder iso-Propan, vorzugsweise ein n-Propan ist; und
   ≥ 25 Gew.-% bis ≤ 45 Gew.-% Butan, vorzugsweise ≥ 27 Gew.-% bis ≤ 42 Gew.-% Propan, weiter bevorzugt ≥ 30 Gew.-% bis ≤ 40 Gew.-% Butan oder auch bevorzugt ≥ 28 Gew.-% bis ≤ 30 Gew.-% Butan, wobei das Butan beispielsweise ein n-Butan, iso-Butan und/oder tert-Butan ist, vorzugsweise n-Butan; und
b) ≥ 30 Gew.-% bis ≤ 50 Gew.-% Aceton und/oder ein C₁ bis C₄ Alkohol, vorzugsweise ≥ 32 Gew.-% bis ≤ 48 Gew.-% Aceton und/oder ein C₁ bis C₄ Alkohol, weiter bevorzugt ≥ 34 Gew.-% bis ≤ 44 Gew.-% Aceton und/oder ein C₁ bis C₄ Alkohol oder auch bevorzugt ≥ 38 Gew.-% bis ≤ 40 Gew.-% Aceton und/oder ein C₁ bis C₄ Alkohol, wobei der C₁ bis C₄ Alkohol vorzugsweise Ethanol und/oder Propanol und bevorzugt Ethanol ist; und
c) ≥ 3 Gew.-% bis ≤ 20 Gew.-% Adamantan, vorzugsweise ≥ 4 Gew.-% bis ≤ 18 Gew.-% Adamantan, weiter bevorzugt ≥ 5 Gew.-% bis ≤ 14 Gew.-% Adamantan oder auch bevorzugt ≥ 7 Gew.-% bis ≤ 12 Gew.-% Adamantan;
wobei die Komponenten so gewählt sind, dass diese 100 Gew.-% nicht übersteigen.

Erfindungsgemäße Zusammensetzungen können außerdem beispielsweise umfassen:
a) ≥ 20 Gew.-% bis ≤ 40 Gew.-% Propan, vorzugsweise ≥ 22 Gew.-% bis ≤ 38 Gew.-% Propan, weiter bevorzugt ≥ 24 Gew.-% bis ≤ 34 Gew.-% Propan oder auch bevorzugt ≥ 28 Gew.-% bis ≤ 30 Gew.-% Propan, wobei das Propan beispielsweise ein n-Propan und/oder iso-Propan, vorzugsweise ein n-Propan ist; und
   ≥ 25 Gew.-% bis ≤ 45 Gew.-% Butan, vorzugsweise ≥ 27 Gew.-% bis ≤ 42 Gew.-% Propan, weiter bevorzugt ≥ 30 Gew.-% bis ≤ 40 Gew.-% Butan oder auch bevorzugt ≥ 28 Gew.-% bis ≤ 30 Gew.-% Butan, wobei das Butan beispielsweise ein n-Butan, iso-Butan und/oder tert-Butan ist, vorzugsweise n-Butan; und
b) ≥ 5 Gew.-% bis ≤ 20 Gew.-% Pentan, vorzugsweise ≥ 6 Gew.-% bis ≤ 18 Gew.-% Pentan, weiter bevorzugt ≥ 34 Gew.-% bis ≤ 44 Gew.-% Pentan oder auch bevorzugt ≥ 38 Gew.-% bis ≤ 40 Gew.-% Pentan, wobei das Pentan vorzugsweise ein n-Pentan, Cyclopentan und/oder verzweigtes Pentan und bevorzugt n-Pentan ist; und
c) ≥ 3 Gew.-% bis ≤ 20 Gew.-% Adamantan, vorzugsweise ≥ 4 Gew.-% bis ≤ 18 Gew.-% Adamantan, weiter bevorzugt ≥ 5 Gew.-% bis ≤ 14 Gew.-% Adamantan oder auch bevorzugt ≥ 7 Gew.-% bis ≤ 12 Gew.-% Adamantan;
wobei die Komponenten so gewählt sind, dass diese 100 Gew.-% nicht übersteigen.

Mit der Erfindung wird ferner ein Verfahren zur Herstellung der erfindungsgemäßen Zusammensetzung vorgeschlagen. Das Verfahren umfasst die Schritte:
a) Bereitstellen des wenigstens einen Cycloalkans,
b) Mahlen des wenigstens einen Cycloalkans zu einem Pulver, insbesondere mit einem Einwellenzerkleinerer,
c) Überführen von ≥ 3 Gew.-% bis ≤ 20 Gew.-% des Pulvers in eine geöffnete druckbeaufschlagbare Vorrichtung, insbesondere in eine geöffnete Sprühdose,
d) Hinzugeben der zumindest einen Lösungsmittel-Komponente in die geöffnete druckbeaufschlagbare Vorrichtung,
e) Verschließen der druckbeaufschlagbaren Vorrichtung mit einem Ventil,
f) Befüllen der druckbeaufschlagbaren Vorrichtung mit ≥ 25 Gew.-% bis ≤ 90 Gew.-% des wenigstens einen Kohlenwasserstoffes unter Beaufschlagen eines Drucks,
wobei die Gewichtsprozentangaben auf das Gesamtgewicht der Zusammensetzung bezogen sind und die Komponenten so gewählt sind, dass das Gesamtgewicht der Komponenten 100 Gew.-% nicht übersteigt, wobei das Verfahren vorzugsweise bei einer Umgebungstemperatur in einem Bereich von ≥ 15 °C bis ≤ 26 °C durchgeführt wird, insbesondere ≥ 20 °C bis ≤ 23 °C.

Vorteilhafterweise kann durch das vorbeschriebene Verfahren erreicht werden, dass die Zusammensetzung besonders gut versprüht werden kann. Insbesondere kann durch das Mahlen des wenigstens einen Cycloalkans erreicht werden, dass sich das wenigstens eine Cycloalkan besonders gut in der Lösungsmittel-Komponente löst.

Durch den vorbeschriebenen Temperaturbereich kann erreicht werden, dass sich das wenigstens eine Cycloalkan ausreichend in der Zusammensetzung löst und zugleich nicht übermäßig sublimiert.

Bevorzugt kann vorgesehen sein, dass Verfahrensschritte a) und b) unmittelbar aufeinanderfolgen. Dadurch kann vorteilhafterweise erreicht werden, dass das Pulver besonders wenig agglomeriert.

Bevorzugt kann vorgesehen sein, dass nach Verfahrensschritt b), insbesondere in Verfahrensschritt c), das Pulver mit Ultraschall behandelt wird. Dadurch kann vorteilhafterweise eine Agglomeration des Pulvers besonders gut verhindert werden, wodurch sich eine besonders gute Löslichkeit ergibt.

### Erfindungsgemäße Zusammensetzungen

Erfindungsgemäß geeignete Zusammensetzungen, beispielsweise für Sprühdosen, sind in den Beispielen 1 bis 3 angegeben.

Der Wert 0 Gew.-% Isobutan schließt Spuren von Isobutan nicht aus. Spuren von Isobutan können mit weniger als 0,1 Gew.-% in der erfindungsgemäßen Zusammensetzung enthalten sein.

### Beispiel 1

| Gew.-% | Komponenten der Zusammensetzung | |
|---|---|---|
| 50,0 Gew.-% | Treibgases (Komponente a) | 22,5 Gew.-% n-Propan und 27,5 Gew.-% n-Butan und 0 Gew.-% Isobutan |
| 11,0 Gew.-% | Isopropanol (Komponente c) | |
| 33,5 Gew.-% | Aceton (Komponente c) | |
| 5,5 Gew.-% | Adamantan (Komponente b) | |
| Σ 100 Gew.-% | Gesamtgewicht der Zusammensetzung | |

### Beispiel 2

| Gew.-% | Komponenten der Zusammensetzung | |
|---|---|---|
| 67,7 Gew.-% | Treibgases (Komponente a) | 30,5 Gew.-% n-Propan und 37,2 Gew.-% n-Butan und 0 Gew.-% Isobutan |
| 24,2 Gew.-% | Ethanol (Komponente c) | |
| 8,1 Gew.-% | Adamantan (Komponente b) | |
| Σ 100 Gew.-% | Gesamtgewicht der Zusammensetzung | |

### Beispiel 3

| Gew.-% | Komponenten der Zusammensetzung | |
|---|---|---|
| 79,3 Gew.-% | Treibgases (Komponente a) | 37,5 Gew.-% n-Propan und 43,6 Gew.-% n-Butan und 0 Gew.-% Isobutan |
| 10,5 Gew.-% | n-Pentan (Komponente c) | |
| 10,2 Gew.-% | Adamantan (Komponente b) | |
| Σ 100 Gew.-% | Gesamtgewicht der Zusammensetzung | |

### Beispiel 4

| Gew.-% | Komponenten der Zusammensetzung | |
|---|---|---|
| 50,0 Gew.-% | Treibgases (Komponente a) | 22,5 Gew.-% iso-Propan und 26,5 Gew.-% n-Butan und 1 Gew.-% Isobutan |
| 11,0 Gew.-% | Isopropanol (Komponente c) | |
| 33,5 Gew.-% | Aceton (Komponente c) | |
| 5,5 Gew.-% | Adamantan (Komponente b) | |
| Σ 100 Gew.-% | Gesamtgewicht der Zusammensetzung | |

### Beispiel 5

| Gew.-% | Komponenten der Zusammensetzung | |
|---|---|---|
| 67,7 Gew.-% | Treibgases (Komponente a) | 30,5 Gew.-% iso-Propan und 37 Gew.-% n-Butan und 0,2 Gew.-% Isobutan |
| 24,2 Gew.-% | Ethanol (Komponente c) | |
| 8,1 Gew.-% | Adamantan (Komponente b) | |
| Σ 100 Gew.-% | Gesamtgewicht der Zusammensetzung | |

### Beispiel 6

| Gew.-% | Komponenten der Zusammensetzung | |
|---|---|---|
| 79,3 Gew.-% | Treibgases (Komponente a) | 37,5 Gew.-% iso-Propan und 43,5 Gew.-% n-Butan und 0,1 Gew.-% Isobutan |
| 10,5 Gew.-% | n-Pentan (Komponente c) | |
| 10,2 Gew.-% | Adamantan (Komponente b) | |
| Σ 100 Gew.-% | Gesamtgewicht der Zusammensetzung | |
| Beispiel 7 | | |

Zur Herstellung einer erfindungsgemäßen Zusammensetzung wird beispielsweise Adamantan bereitgestellt. Adamantan verklumpt schnell und kann zudem einfach sublimieren. Das Verfahren wird entsprechend bei Raumtemperatur durchgeführt. Zunächst wird das bereitgestellte Adamantan mit einem Einwellenzerkleiner zu einem Pulver gemahlen und sofort zur Befüllung gefördert. Es werden jeweils 25 g des Adamantans in einer automatischen Abfüllanlage in offene Sprühdosen gegeben. Dabei wird das Adamantan durch einen Trichter geleitet. Dabei wird mit Ultraschall ein Verklumpen des Adamantanpulvers vermieden. Nach Befüllung der offenen Sprühdose mit dem Adamantanpulver werden jeweils 25 g Ethanol in die offene Sprühdose gegeben. Im nächsten Schritt wird die Dose mit einem Ventil verschlossen. Beispielsweise kann das Ventil mit einer Clinchmaschine mit der Dose fest verbunden werden. Anschließend wird die Sprühdose über das Ventil mit 200 g eines Gemisches aus Propan und Butan gefüllt. Dabei bildet sich ein Druck in der Dose, der bei Betätigung ein Versprühen der Zusammensetzung erlaubt.

## Patentansprüche

1. Zusammensetzung, enthaltend die Komponenten:
a) ≥ 25 Gew.-% bis ≤ 90 Gew.-% wenigstens einen Kohlenwasserstoff, der bei 23° C gasförmig ist, und aus der Gruppe der C₁ bis C₄ - Kohlenwasserstoffe ausgewählt ist;
b) ≥ 3 Gew.-% bis ≤ 20 Gew.-% wenigstens ein Cycloalkan ausgewählt aus der Gruppe der Diamantoide und/oder ein Diamantoid-Derivat davon; und
c) wenigstens eine Lösungsmittel-Komponente, die bei 23° C flüssig ist, und ausgewählt ist aus der Gruppe umfassend Aceton, C₁ bis C₄ Alkohol und/oder C₅ bis C₈ Kohlenwasserstoff;
wobei die Gewichtsprozentangaben auf das Gesamtgewicht der Zusammensetzung bezogen sind und die Komponenten a), b) und c) so gewählt sind, dass das Gesamtgewicht der Komponenten 100 Gew.-% nicht übersteigt.

2. Zusammensetzung nach Anspruch 1, wobei die Komponente a) ein Gemisch aus Propan, n-Butan und Isobutan umfasst; vorzugsweise umfassend ≥ 30 Gew.-% bis ≤ 80 Gew.-% eines Gemisches aus Propan, n-Butan und Isobutan, bevorzugt umfassend ≥ 35 Gew.-% bis ≤ 75 Gew.-% eines Gemisches aus Propan, n-Butan und Isobutan, weiter bevorzugt umfassend ≥ 40 Gew.-% bis ≤ 70 Gew.-% eines Gemisches aus Propan, n-Butan und Isobutan und außerdem bevorzugt umfassend ≥ 45 Gew.-% bis ≤ 70 Gew.-% eines Gemisches aus Propan, n-Butan und Isobutan, und besonders bevorzugt umfassend ≥ 50 Gew.-% bis ≤ 80 Gew.-% eines Gemisches aus Propan, n-Butan und Isobutan; wobei Propan ein n-Propan, ein Isopropan oder ein Gemisch aus n-Propan und Isopropan ist, vorzugsweise ist Propan ein Isopropan.

3. Zusammensetzung nach einem der Ansprüche 1 oder 2, wobei die Komponente a) umfasst:
- ≥ 30 Gew.-% bis ≤ 60 Gew.-%, bevorzugt ≥ 40 Gew.-% bis ≤ 50 Gew.-% und besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
- ≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% n-Butan;
- ≥ 0,1 Gew.-% bis 5 Gew.-%, bevorzugt ≥ 0,5 Gew.-% bis ≤ 2,5 Gew.-%, und besonders bevorzugt ≥ 0,75 Gew.-% bis ≤ 1,25 Gew.-% Isobutan.

4. Zusammensetzung nach einem der Ansprüche 1 bis 3, wobei die Komponente b) umfasst:
- ≥ 3 Gew.-% bis ≤ 18 Gew.-%, vorzugsweise ≥ 3,5 Gew.-% bis ≤ 16 Gew.-%, weiter bevorzugt ≥ 4 Gew.-% bis ≤ 14 Gew.-%, außerdem bevorzugt ≥ 4,5 Gew.-% bis ≤ 12 Gew.-%, und am meisten bevorzugt ≥ 5 Gew.-% bis ≤ 11 Gew.-% wenigstens ein Diamantoide ausgewählt aus der Gruppe umfassen Adamantan, Icean (C₁₂H₁₈), BC-8 (C₁₄H₂₀), Diamantan (C₁₄H₂₀), Triamantan (C₁₈H₂₄), Isotetramantan (C₂₂H₂₈), Pentamantan (C₂₆H₃₂) und Super-Adamantan (C₃₀H₃₆) und/oder wenigstens ein Diamantoid-Derivat, vorzugsweise 1-Adamantol, wobei als Komponente b) Adamantan am meisten bevorzugt ist.

5. Zusammensetzung nach einem der Ansprüche 1 bis 4, wobei die Komponente c) umfasst:
- ≥ 0,1 Gew.-% bis ≤ 60 Gew.-%, ≥ 1 Gew.-% bis ≤ 55 Gew.-%, vorzugsweise ≥ 5 Gew.-% bis ≤ 50 Gew.-%, weiter bevorzugt ≥ 10 Gew.-% bis ≤ 45 Gew.-%, außerdem bevorzugt ≥ 15 Gew.-% bis ≤ 40 Gew.-%, insbesondere bevorzugt ≥ 20 Gew.-% bis ≤ 35 Gew.-%, wenigstens eine Lösungsmittel-Komponente, die bei 23° C flüssig ist, und ausgewählt ist aus der Gruppe umfassend Aceton, C₁ bis C₄ Alkohol und/oder C₅ bis C₈ Kohlenwasserstoff, und vorzugsweise Aceton, Pentan, Ethanol und/oder Isopropanol.

6. Zusammensetzung nach einem der Ansprüche 1 bis 5, wobei die Komponente c) umfasst:
- ≥ 1 Gew.-% bis ≤ 50 Gew.-% Ethanol, vorzugsweise ≥ 5 Gew.-% bis ≤ 45 Gew.-% Ethanol, weiter bevorzugt ≥ 10 Gew.-% bis ≤ 40 Gew.-% Ethanol, außerdem bevorzugt ≥ 15 Gew.-% bis ≤ 35 Gew.-% Ethanol, insbesondere bevorzugt ≥ 20 Gew.-% bis ≤ 30 Gew.-% Ethanol, und am meisten bevorzugt ≥ 20 Gew.-% bis ≤ 25 Gew.-% Ethanol, aufweist.

7. Zusammensetzung nach einem der Ansprüche 1 bis 6, wobei die Zusammensetzung unter einem Druck von ≥ 100 kPa bis ≤ 1000 kPa, vorzugsweise von ≥ 200 kPa bis ≤ 800 kPa, weiter bevorzugt von ≥ 300 kPa bis ≤ 600 kPa, und besonders bevorzugt von ≥ 400 kPa bis ≤ 500 kPa, steht.

8. Zusammensetzung nach einem der Ansprüche 1 bis 7, wobei die Zusammensetzung eine homogene und/oder klare flüssige Lösung ist, und vorzugsweise ist die Zusammensetzung eine homogene und/oder klare flüssige Lösung bei 23° C.

9. Vorrichtung enthaltend eine druckbeaufschlagte Zusammensetzung nach einem der Ansprüche 1 bis 8, wobei die Vorrichtung vorzugsweise eine Sprühvorrichtung und bevorzugt eine Sprühdose ist.

10. Verwendung der Zusammensetzung nach einem der Ansprüche 1 bis 8 zur Ausbildung einer dünnen, sublimierbaren Beschichtung auf Oberflächen, für optische Messungen an diesen Oberflächen.

11. Verwendung der Zusammensetzung nach Anspruch 10, zur tomografischen Vermessung von Formkörpern.

12. Verwendung der Zusammensetzung nach Anspruch 10, zur zerstörungsfreien Werkstoffprüfung (NDT) an Oberflächen.

13. Verfahren zur Herstellung einer Zusammensetzung nach einem der Ansprüche 1 bis 8, umfassend die Schritte:
a) Bereitstellen des wenigstens einen Cycloalkans,
b) Mahlen des wenigstens einen Cycloalkans zu einem Pulver, insbesondere mit einem Einwellenzerkleiner,
c) Überführen von ≥ 3 Gew.-% bis ≤ 20 Gew.-% des Pulvers in eine geöffnete druckbeaufschlagbare Vorrichtung, insbesondere in eine geöffnete Sprühdose,
d) Hinzugeben der zumindest einen Lösungsmittel-Komponente in die geöffnete druckbeaufschlagbare Vorrichtung,
e) Verschließen der druckbeaufschlagbaren Vorrichtung mit einem Ventil,
f) Befüllen der druckbeaufschlagbaren Vorrichtung mit ≥ 25 Gew.-% bis ≤ 90 Gew.-% des wenigstens einen Kohlenwasserstoffes unter Beaufschlagen eines Drucks,
wobei die Gewichtsprozentangaben auf das Gesamtgewicht der Zusammensetzung bezogen sind und die Komponenten so gewählt sind, dass das Gesamtgewicht der Komponenten 100 Gew.-% nicht übersteigt, wobei das Verfahren vorzugsweise bei einer Umgebungstemperatur in einem Bereich von ≥ 15 °C bis ≤ 26 °C durchgeführt wird, insbesondere ≥ 20 °C bis ≤ 23 °C.

14. Verfahren zur Herstellung einer Zusammensetzung nach Anspruch 13, wobei nach Verfahrensschritt b), insbesondere in Verfahrensschritt c), das Pulver mit Ultraschall behandelt wird.

## Claims

1. Composition containing the components:
a) ≥ 25 % by weight to ≤ 90 % by weight of at least one hydrocarbon that is gaseous at 23°C and is selected from the group of C₁ to C₄ hydrocarbons;
b) ≥ 3 % by weight to ≤ 20 % by weight of at least one cycloalkane selected from the group of diamondoids and/or a diamondoid derivative thereof; and
c) at least one solvent component that is liquid at 23°C and is selected from the group comprising acetone, C₁ to C₄ alcohol and/or C₅ to C₈ hydrocarbon;
whereby the percentages by weight refer to the total weight of the composition and components a), b) and c) are selected such that the total weight of the components does not exceed 100 % by weight.

2. Composition according to Claim 1, whereby component a) is a mixture of propane, n-butane and isobutane; preferably including ≥ 30 % by weight to ≤ 80 % by weight of a mixture of propane, n-butane and isobutane, preferably including ≥ 35 % by weight to ≤ 75 % by weight of a mixture of propane, n-butane and isobutane, further preferably including ≥ 40 % by weight to ≤ 70 % by weight of a mixture of propane, n-butane and isobutane and also preferably including ≥ 45 % by weight to ≤ 70 % by weight of a mixture of propane, n-butane and isobutane, and particularly preferably including ≥ 50 % by weight to ≤ 80 % by weight of a mixture of propane, n-butane and isobutane; whereby propane is an n-propane, an isopropane or a mixture of n-propane and isopropane; preferably propane is an isopropane.

3. Composition according to one of Claims 1 or 2, whereby component a) includes:
- ≥ 30 % by weight to ≤ 60 % by weight, preferably ≥ 40 % by weight to ≤ 50 % by weight and particularly preferably ≥ 42 % by weight to ≤ 47% by weight of propane, whereby propane is an n-propane, an isopropane or a mixture of n-propane and isopropane; preferably propane is an isopropane;
- ≥ 40 % by weight to ≤ 70 % by weight, preferably ≥ 50 % by weight to ≤ 60 % by weight, and particularly preferably ≥ 52 % by weight to ≤ 57 % by weight of n-butane;
- ≥ 0.1 % by weight to 5 % by weight, preferably ≥ 0.5 % by weight to ≤ 2.5 % by weight, and particularly preferably ≥ 0.75 % by weight to ≤ 1.25 % by weight of isobutane.

4. Composition according to one of Claims 1 to 3, whereby component b) includes:
- ≥ 3 % by weight to ≤ 18 % by weight, preferably ≥ 3.5 % by weight to ≤ 16 % by weight, further preferably ≥ 4 % by weight to ≤ 14 % by weight, also preferably ≥ 4.5 % by weight to ≤ 12 % by weight, and most preferably ≥ 5 % by weight to ≤ 11 % by weight of at least one diamondoid selected from the group including adamantane, iceane (C₁₂H₁₈), BC-8 (C₁₄H₂₀), diamantane (C₁₄H₂₀), triamantane (C₁₈H₂₄), isotetramantane (C₂₂H₂₈), pentamantane (C₂₆H₃₂) and super-adamantane (C₃₀H₃₆) and/or at least one diamondoid derivative, preferably 1-adamantanol, whereby adamantane is most preferred as component b).

5. Composition according to one of Claims 1 to 4, whereby component c) includes:
- ≥ 0.1 % by weight to ≤ 60 % by weight, ≥ 1 % by weight to ≤ 55 % by weight, preferably ≥ 5 % by weight to ≤ 50 % by weight, further preferably ≥ 10 % by weight to ≤ 45 % by weight, also preferably ≥ 15 % by weight to ≤ 40 % by weight, particularly preferably ≥ 20 % by weight to ≤ 35 % by weight, at least one solvent component that is liquid at 23°C and is selected from the group comprising acetone, C₁ to C₄ alcohol and/or C₅ to C₈ hydrocarbon, and preferably acetone, pentane, ethanol and/or isopropanol.

6. Composition according to one of Claims 1 to 5, whereby component c) includes:
- ≥ 1 % by weight to ≤ 50 % by weight of ethanol, preferably ≥ 5 % by weight to ≤ 4 5% by weight of ethanol, further preferably ≥ 10 % by weight to ≤ 40 % by weight of ethanol, also preferably ≥ 15 % by weight to ≤ 35 % by weight of ethanol, particularly preferably ≥ 20 % by weight to ≤ 30 % by weight of ethanol, and most preferably ≥ 20 % by weight to ≤ 25 % by weight of ethanol.

7. Composition according to one of Claims 1 to 6, whereby the composition is subject to a pressure of ≥ 100 kPa to ≤ 1000 kPa, preferably of ≥ 200 kPa to ≤ 800 kPa, further preferably of ≥ 300 kPa to ≤ 600 kPa, and particularly preferably of ≥ 400 kPa to ≤ 500 kPa.

8. Composition according to one of Claims 1 to 7, whereby the composition is a homogeneous and/or clear liquid solution, and preferably the composition is a homogeneous and/or clear liquid solution at 23°C.

9. Device according a pressurised composition according to one of Claims 1 to 8, whereby the device is preferably a spraying device and preferably an aerosol can.

10. Use of the composition according to one of Claims 1 to 8 to form a thin, sublimable coating on surfaces, for optical measurements on these surfaces.

11. Use of the composition according to Claim 10 for the tomographic measurement of molded parts.

12. Use of the composition according to Claim 10 for non-destructive materials testing (NDT) on surfaces.

13. Method for the production of a composition according to one of Claims 1 to 8, including the steps:
a) Provision of at least one cycloalkane,
b) Grinding of at least one cycloalkane into a powder, in particular with a single-shaft shredder,
c) Transfer of ≥ 3 % by weight to ≤ 20 % by weight of the powder into an open pressurisable device, in particular into an open aerosol can,
d) Adding of at least one solvent component into the open pressurisable device,
e) Sealing of the pressurisable device with a valve,
f) Filling of the pressurisable device with ≥ 25 % by weight to ≤ 90 % by weight of at least one hydrocarbon under application of pressure,
whereby the percentages by weight refer to the total weight of the composition and the components are selected such that the total weight of the components does not exceed 100 % by weight, whereby the method is preferably carried out at an ambient temperature in a range from ≥ 15°C to ≤ 26°C, in particular ≥ 20°C to ≤ 23°C.

14. Method for the production of a composition according to Claim 13, whereby after step b) of the method, in particular after step c) of the method, the powder is treated with ultrasound.

## Revendications

1. Composition comprenant les composants suivants :
a) ≥ 25 % en poids à ≤ 90 % en poids d'au moins un hydrocarbure qui est gazeux à 23 °C et qui est choisi dans le groupe des hydrocarbures en C₁ à C₄ ;
b) ≥ 3 % en poids à ≤ 20 % en poids d'au moins un cycloalcane choisi dans le groupe des diamantoïdes et/ou d'un dérivé de diamantoïde ; et
c) au moins un composant solvant qui est liquide à 23 °C et qui est choisi dans le groupe comprenant l'acétone, les alcools en C₁ à C₄ et/ou les hydrocarbures en C₅ à C₈ ;
dans laquelle les pourcentages en poids étant basés sur le poids total de la composition et les composants a), b) et c) étant choisis de telle sorte que le poids total des composants ne dépasse pas 100 % en poids.

2. Composition selon la revendication 1, dans laquelle le composant a) comprend un mélange de propane, de n-butane et d'isobutane ; comprenant de préférence ≥ 30 % en poids à ≤ 80 % en poids d'un mélange de propane, de n-butane et d'isobutane, de préférence comprenant ≥ 35 % en poids à ≤ 75 % en poids d'un mélange de propane, de n-butane et d'isobutane, de préférence comprenant ≥ 40 % en poids à ≤ 70 % en poids d'un mélange de propane, de n-butane et d'isobutane et comprenant en outre de préférence ≥ 45 % en poids à ≤ 70 % en poids d'un mélange de propane, de n-butane et d'isobutane, et comprenant de manière particulièrement préférée ≥ 50 % en poids à ≤ 80 % en poids d'un mélange de propane, de n-butane et d'isobutane ; dans laquelle le propane étant un n-propane, un isopropane ou un mélange de n-propane et d'isopropane, le propane étant de préférence un isopropane.

3. Composition selon l'une des revendications 1 ou 2, dans laquelle le composant a) comprend :
- ≥ 30 % en poids à ≤ 60 % en poids, de préférence ≥ 40 % en poids à ≤ 50 % en poids et de manière particulièrement préférée ≥ 42 % en poids à ≤ 47 % en poids de propane, le propane étant un n-propane, un isopropane ou un mélange de n-propane et d'isopropane, le propane étant de préférence un isopropane ;
- ≥ 40 % en poids à ≤ 70 % en poids, de préférence ≥ 50 % en poids à ≤ 60 % en poids, et de manière particulièrement préférée ≥ 52 % en poids à ≤ 57 % en poids de n-butane ;
- ≥ 0,1 % en poids à 5 % en poids, de préférence ≥ 0,5 % en poids à ≤ 2,5 % en poids, et de manière particulièrement préférée ≥ 0,75 % en poids à ≤ 1,25 % en poids d'isobutane.

4. Composition selon l'une des revendications 1 à 3, dans laquelle le composant b) comprend :
- ≥ 3 % en poids à ≤ 18 % en poids, de préférence ≥ 3,5 % en poids à ≤ 16 % en poids, plus préférablement ≥ 4 % en poids à ≤ 14 % en poids, en outre de préférence ≥ 4,5 % en poids à ≤ 12 % en poids, et de préférence ≥ 5 % en poids à ≤ 11 % en poids d'au moins un diamantoïde choisi dans le groupe comprenant l'adamantane, l'iceane (C₁₂H₁₈), le BC-8 (C₁₄H₂₀), le diamantane (C₁₄H₂₀), le triamantane (C₁₈H₂₄), l'isotétramantane (C₂₂H₂₈), le pentamantane (C₂₆H₃₂) et le super-adamantane (C₃₀H₃₆) et/ou au moins un dérivé de diamantoïde, de préférence le 1-adamantol, l'adamantane étant le composant b) le plus préféré.

5. Composition selon l'une des revendications 1 à 4, dans laquelle le composant c) comprend :
- ≥ 0,1 % en poids à ≤ 60 % en poids, ≥ 1 % en poids à ≤ 55 % en poids, de préférence
≥ 5 % en poids à ≤ 50 % en poids, de préférence encore ≥ 10 % en poids à ≤ 45 % en poids, également de préférence ≥ 15 % en poids à ≤ 40 % en poids, de préférence encore ≥ 20 % en poids à ≤ 35 % en poids, d'au moins un composant solvant qui est liquide à 23 °C et qui est choisi dans le groupe comprenant l'acétone, l'alcool C₁ à C₄ et/ou l'hydrocarbure C₅ à C₈, et de préférence l'acétone, le pentane, éthanol et/ou isopropanol.

6. Composition selon l'une des revendications 1 à 5, dans laquelle le composant c) comprend :
- ≥ 1 % en poids à ≤ 50 % en poids d'éthanol, de préférence ≥ 5 % en poids à ≤ 45 % en poids d'éthanol, plus préférablement ≥ 10 % en poids à ≤ 40 % en poids d'éthanol, en outre de préférence ≥ 15 % en poids à ≤ 35 % en poids d'éthanol, en particulier de préférence ≥ 20 % en poids à ≤ 30 % en poids d'éthanol, et le plus préférablement ≥ 20 % en poids à ≤ 25 % en poids d'éthanol.

7. Composition selon l'une des revendications 1 à 6, la composition étant sous une pression de ≥ 100 kPa à ≤ 1000 kPa, de préférence de ≥ 200 kPa à ≤ 800 kPa, plus préférentiellement de ≥ 300 kPa à ≤ 600 kPa, et particulièrement préférentiellement de ≥ 400 kPa à ≤ 500 kPa.

8. Composition selon l'une des revendications 1 à 7, dans laquelle la composition est une solution liquide homogène et/ou claire, et de préférence, la composition est une solution liquide homogène et/ou claire à 23 °C.

9. Dispositif contenant une composition sous pression selon l'une quelconque des revendications 1 à 8, dans lequel le dispositif étant de préférence un dispositif de pulvérisation et de préférence une bombe aérosol.

10. Utilisation de la composition selon l'une quelconque des revendications 1 à 8 pour former un revêtement mince et sublimable sur des surfaces, pour des mesures optiques sur ces surfaces.

11. Utilisation de la composition selon la revendication 10 pour la mesure tomographique de corps moulés.

12. Utilisation de la composition selon la revendication 10 pour le contrôle non destructif (CND) sur des surfaces.

13. Procédé de fabrication d'une composition selon l'une quelconque des revendications 1 à 8, comprenant les étapes suivantes :
a) la mise à disposition d'au moins un cycloalcane,
b) le broyage d'au moins un cycloalcane en une poudre, en particulier à l'aide d'un broyeur à un arbre unique,
c) le transfert de ≥ 3 % en poids à ≤ 20 % en poids de la poudre dans un dispositif ouvert pouvant être mis sous pression, en particulier dans une bombe aérosol ouverte,
d) l'ajout d'au moins une composant solvant dans le dispositif ouvert pouvant être mis sous pression,
e) la fermeture du dispositif pouvant être mis sous pression à l'aide d'une vanne,
f) le remplissage du dispositif pouvant être mis sous pression avec ≥ 25 % en poids à ≤ 90 % en poids d'au moins un hydrocarbure sous pression,
dans lequel les pourcentages en poids étant basés sur le poids total de la composition et les composants étant choisis de telle sorte que le poids total des composants ne dépasse pas 100 % en poids, le procédé étant de préférence mis en œuvre à une température ambiante comprise dans une plage de ≥ 15 °C à ≤ 26 °C, en particulier de ≥ 20 °C à ≤ 23 °C.

14. Procédé de fabrication d'une composition selon la revendication 13, dans lequel après l'étape b) du procédé, en particulier dans l'étape c) du procédé, la poudre est traitée par ultrasons.
